# EUROPÄISCHE PATENTSCHRIFT

(11) **EP 2 537 217 B1**
(45) Veröffentlichungstag und Bekanntmachung des Hinweises auf die Patenterteilung: **10.08.2016**
(21) Anmeldenummer: 11708980.5
(22) Anmeldetag: 07.02.2011
(51) Int. Cl.: H02G 3/14

(54) **ABDECKRAHMEN FÜR INSTALLATIONSGERÄTE**
COVER FRAME FOR INSTALLATION DEVICES
CADRE DE RECOUVREMENT POUR DISPOSITIFS D'INSTALLATION

(30) Priorität: 18.02.2010 DE 102010008507
(43) Veröffentlichungstag der Anmeldung: 26.12.2012
(73) Patentinhaber: Peha Elektro GmbH & Co.KG, 58511 Lüdenscheid (DE)
(72) Erfinder: HAUGK, Christian, 58579 Schalksmühle (DE); BIESENBACH, Martin, 58579 Schalksmühle (DE)
(74) Vertreter: Patentanwälte Dörner & Kötter PartG mbB
(86) Internationale Anmeldenummer: PCT/EP2011/000562
(87) Internationale Veröffentlichungsnummer: WO 2011/101101

(56) Entgegenhaltungen:
- WO-A1-2007/095938
- DE-U1-202004 018 908
- GB-A- 2 177 856
- US-A1- 2002 085 370
- US-B1- 6 183 101
- US-B1- 6 765 149

## Beschreibung

Die Erfindung betrifft ein Abdeckrahmen für Installationsgeräte aus transluszentem Material mit mindestens einer Öffnung, die von einer Einfassung begrenzt ist, wobei mindestens eine Tasche vorgesehen ist, in der ein Leuchtmittel angeordnet ist.

Abdeckrahmen der eingangs genannten Art sind in vielfältiger Weise bekannt. Bei den Installationsgeräten der hier betrachteten Art handelt es sich um Steckdosen, Schalter, Wandradios und dergleichen. Die Abdeckrahmen umgeben die Installationsgeräte allseitig. Die Abdeckrahmen sind zumeist geklemmt von den mit der Wand verschraubten Installationsgeräten gehalten.

Die Abdeckrahmen für Installationsgeräte sind in verschiedensten Ausführungen bekannt. Dies hat seine Ursache darin, dass die Abdeckrahmen durch ihre Gestaltung zum ästhetischen Gesamteindruck einer Baureihe von Installationsgeräten beitragen. In Folge dessen sind die Abdeckrahmen in unterschiedlichsten Formen, Farben und Materialien erhältlich. Bei den Abdeckrahmen der hier betrachteten Art handelt es sich um solche, die aus transluszentem Material hergestellt sind. Auch solche Abdeckrahmen sind in verschiedensten Ausführungen bekannt. Aus der DE 20 2004 018908 U1, GB 2 177 856 A und US 6 765 149 B1 sind zudem Rahmen für Installationsgeräte bekannt, die eine Beleuchtung aufweisen.

Der vorliegenden Erfindung liegt die Aufgabe zu Grunde, Abdeckrahmen für Installationsgeräte hinsichtlich ihrer technischen und ästhetischen Eigenschaften weiterzubilden.

Diese Aufgabe wird durch die Merkmale des Anspruchs 1 gelöst.

In Weiterbildung der Erfindung ist das Leuchtmittel eine LED. Die Verwendung von LEDs als Leuchtmittel bietet den Vorteil, dass diese äußerst energiesparend sind. Zudem entwickeln LEDs so gut wie keine Wärme, so dass keine besonderen Maßnahmen gegen Überhitzung in dem Abdeckrahmen vorgenommen werden müssen. Des weiteren sind die LEDs in der Lage, den Abdeckrahmen über seine ganze Fläche zu durchleuchten. Durch Einfräsungen in dem Rahmen besteht die Möglichkeit, die von den LEDs ausgesandten Lichtwellen zu brechen, so dass Hinweise, Werbungen oder dergleichen lesbar sind, ohne hierfür zusätzliche gesonderte Hinweisschilder anbringen zu müssen, die in der Regel den ästhetischen Gesamteindruck des Abdeckrahmens stören.

In vorteilhafter Weiterbildung der Erfindung sind die Kontakte für die Stromversorgung von Federkontakten gebildet. Die Verwendung von Federkontakten stellt eine wesentliche Vereinfachung bei der Montage der Abdeckrahmen bereit, da beim bestimmungsgemäßen Einbau des Abdeckrahmens automatisch ein Kontakt mit der gebäudeseitigen Stromversorgung geschaffen ist. Hierdurch kann auch auf den zusätzlichen Arbeitsgang eines Anschließens des Abdeckrahmens an die gebäudeseitige Stromversorgung verzichtet werden.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die Ansicht eines Abdeckrahmens mit Installationsgeräten;
- Fig. 2: die Seitenansicht von links des in Figur 1 dargestellten Abdeckrahmens;

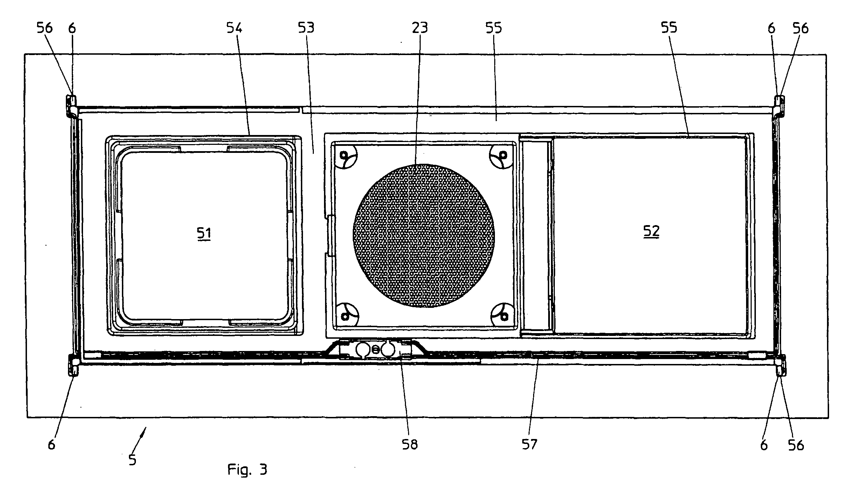

- Fig. 3: die rückwärtige Ansicht eines Abdeckrahmens;
- Fig. 4: die explosionsartige Darstellung von Abdeckrahmen und Installationsgeräten;

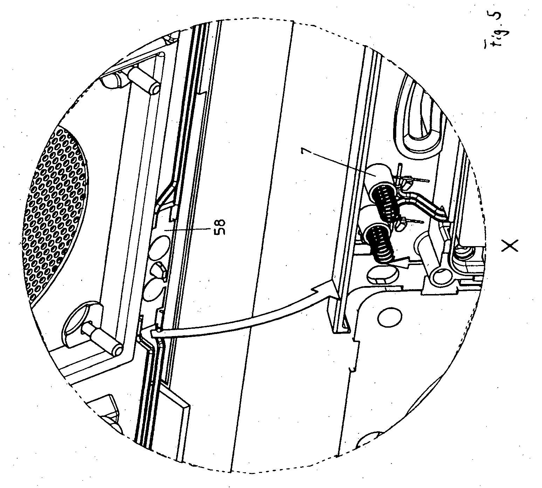

- Fig. 5: die vergrößerte Darstellung des mit "X" gekennzeichneten Bereichs in Figur 4.

In dem gewählten Ausführungsbeispiel sind Installationsgeräte in Form einer Steckdose 1, eines Lautsprechers 2 sowie eines Radios 3 in bzw. auf einer Wand 4 verbaut. Die Installationsgeräte 1, 2 und 3 sind von einem Abdeckrahmen 5 umgeben.

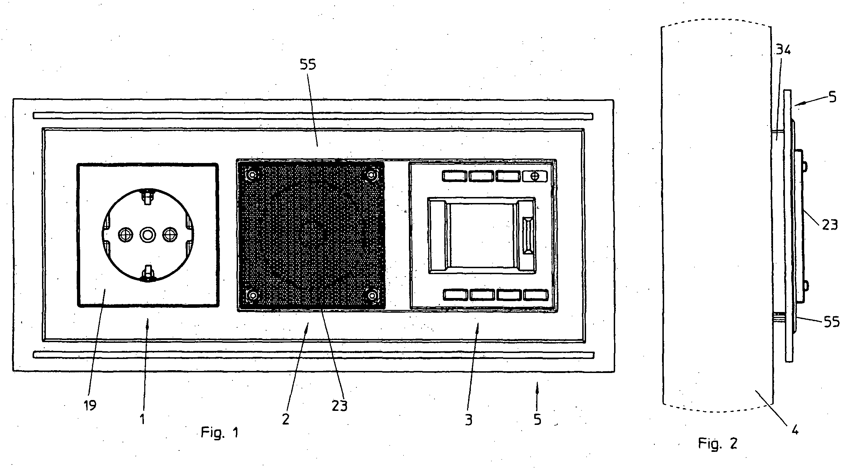

Die Steckdose 1 ist in bekannter Weise aufgebaut. Sie weist einen Steckdosensockel 11 auf, der in bekannter Weise aus Kunststoff hergestellt ist und in dem zwei Kontaktfedern 12 für das Einstecken der Stifte von Steckern vorgesehen sind. Die Kontaktfedern stehen in montiertem Zustand in Verbindung mit den stromführenden Adern der Stromleitung. Zudem weist die Steckdose Erdungsbügel 13 auf, die mit dem Steckdosensockel 11 verschraubt sind. Es ist eine Tragplatte 14 vorgesehen, die aus Metall hergestellt ist. Die Tragplatte 14 ist über Stege 15 mit dem Steckdosensockel 11 verbunden. Die Platte 14 weist in ihrer Mitte eine Öffnung 16 auf, die zum Durchtritt eines Steckers dient. Die Tragplatte 14 selbst ist an ihrem Rand mit Langlöchern 17 zur Montage an dem jeweiligen Einsatzort sowie mit Bohrungen 18 versehen. In montiertem Zustand (Figur 1) ist die Steckdose 1 mit einem Einsatz 19 überdeckt, der mit dem Steckdosensockel 11 verschraubt ist.

Der Lautsprecher 2 ist in an sich bekannter Weise aufgebaut. Er weist eine Membran 21 auf, die in einem Rahmen 22 gehalten ist. Die Membran 212 ist über - nicht dargestellte - Leitungen mit dem Radio 3 verbunden. In montiertem Zustand ist der Lautsprecher 2 von einem Schutzgitter 23 abgedeckt, das mit dem Rahmen 22 verschraubt ist (Fig. 1).

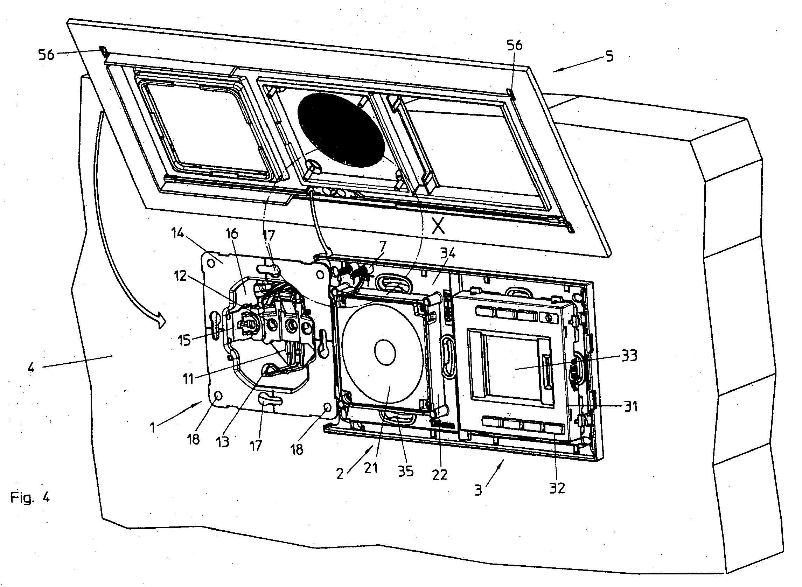

Das Radio 3 weist ein Gehäuse 31 auf. In dem Gehäuse 31 sind einerseits Tasten 32 für die Bedienung des Radios vorgesehen. Andererseits ist ein Display 33 vorgesehen, welches zur Information des Benutzers dient. Das Gehäuse 31 ist mit einer Bodenplatte 34 verclipst. Auf der Bodenplatte 34 ist auch der Rahmen 22 des Lautsprechers 2 angeordnet (Fig. 4). Zur Montage ist die Bodenplatte 34 mit der Wand 4 verschraubt. Aus diesem Grund sind in der Bodenplatte 34 Langlöcher 35 vorgesehen.

Der Abdeckrahmen 5 ist aus transluszentem Material hergestellt, vorzugsweise aus Plexiglas. Er hat im Ausführungsbeispiel eine rechteckige Grundform. Er ist zur Aufnahme der drei Installationsgeräte 1, 2 und 3 ausgebildet. In Abwandlung des Ausführungsbeispiels besteht auch die Möglichkeit, den Abdeckrahmen beispielsweise quadratisch auszubilden, um die Aufnahme lediglich eines Installationsgeräts zu ermöglichen. Auch andere Ausbildungen, beispielsweise zur Aufnahme von zwei, vier oder mehr Installationsgeräten sind möglich.

In dem Abdeckrahmen 5 sind Öffnungen 51 und 52 für die Aufnahme der Installationsgeräte 1, 2 und 3 vorgesehen. Die Öffnungen 51 und 52 sind durch einen Steg 53 voneinander getrennt. Die Öffnung 51 hat einen quadratischen Querschnitt und ist in montiertem Zustand vom Einsatz 19 der Steckdose 1 ausgefüllt. Die Öffnung 52 hat einen rechteckigen Querschnitt und nimmt sowohl den Lautsprecher 2 als auch das Radio 3 auf. Die Öffnungen 51 und 52 sind auf der Wandseite von Einfassungen 54 begrenzt. Auf der Ansichtsseite sind die Öffnungen 51 und 52 von einem erhabenen Bereich 55 umgeben. In dem Abdeckrahmen 5 sind im Ausführungsbeispiel vier Taschen 56 vorgesehen. Die Taschen 56 sind in den Abdeckrahmen 5 eingefräst. Sie haben einen rechteckigen Querschnitt und erstrecken sich parallel zu den Stirnseiten des Abdeckrahmens. Die Taschen 56 sind im Bereich der den Stirnseiten des Abdeckrahmens 5 zugewandten Ecken der Öffnungen 51 und 52 angeordnet.

In den Taschen 56 sind Leuchtmittel 6 angeordnet. Bei den Leuchtmitteln 6 handelt es sich im Ausführungsbeispiel um LEDs. Vorzugsweise finden hier drei-farb-LEDs Verwendung, die somit einen Farbwechsel ermöglichen. Die Leuchtmittel 6 sind über Leiterbahnen 57 an eine Stromversorgung des Gebäudes angebunden. Die Leiterbahnen 57 stehen mit einer Leiterplatte 58 in Verbindung. Die Leiterbahnen 57 sowie die Leiterplatte 58 befinden sich in dem von dem erhabenen Bereich 55 umfassten Teil des Abdeckrahmens 5. Die Leiterbahnen 57 sowie die Leiterplatte 58 sind somit in dem verdeckten Bereich des Abdeckrahmens 5 vorgesehen und stören damit nicht den optischen Eindruck des Abdeckrahmens. In die Leiterplatte 58 sind Kontakte 59 für die Stromversorgung integriert. Die Kontakte für die Stromversorgung sind von Federkontakten gebildet. Die Federkontakte befinden sich im Ausführungsbeispiel auf der Seite der Installationsgeräte, nämlich auf der Bodenplatte 34 und sind mit "7" gekennzeichnet.

Die im Ausführungsbeispiel als Leuchtmittel 6 gewählten LEDs strahlen in einem Winkel von 2° ihre Lichtwellen entlang der Längsseiten des Abdeckrahmens 5 aus. Auf Grund dieser Streuung der Lichtwellen ist gewährleistet, dass die gesamten Längsseiten des Abdeckrahmens 5 hinterleuchtet werden. In Ergänzung des Ausführungsbeispiels besteht auch die Möglichkeit, die Stirnseiten des Abdeckrahmens 5 zu hinterleuchten. Hierzu ist es lediglich erforderlich, Leuchtmittel 6 in zusätzlichen Taschen vorzusehen, die dann eine zu den Längsseiten des Abdeckrahmens parallele Ausrichtung aufweisen. Auf diese Weise ist eine allseitige Beleuchtung des Abdeckrahmens möglich. Zudem ist durch Einfräsen von Buchstaben, Zahlen, Symbolen oder dergleichen ein Hinweischarakter für die Verwendung der Abdeckrahmen möglich, da sich an den Fräsungen die Lichtwellen der LEDs brechen und somit die Buchstaben, Zahlen oder Symbole erkenntlich sind.

## Patentansprüche

1. Abdeckrahmen (5), für Installationsgeräte, aus transluszentem Material mit mindestens einer Öffnung (16), die von einer Einfassung (54) begrenzt ist, wobei mindestens eine Tasche (56) vorgesehen ist, in der ein Leuchtmittel (6) angeordnet ist, wobei das Leuchtmittel (6) über Leiterbahnen (57) an eine Stromversorgung angebunden ist, die mit einer Leiterplatte (58) in Verbindung stehen und dass in die Leiterplatte (58) Kontakte für die Stromversorgung integriert sind.

2. Abdeckrahmen nach Anspruch 1, **dadurch gekennzeichnet, dass** das Leuchtmittel (6) eine LED ist.

3. Abdeckrahmen nach einem oder mehreren der vorgenannten Ansprüche, **dadurch gekennzeichnet, dass** die Kontakte für die Stromversorgung von Federkontakten (7) gebildet sind.

## Claims

1. Cover frame (5), for installation devices, of a translucent material having at least one opening (16) delimited by an enclosure (54), wherein at least one pocket (56) is provided, in which a lighting means (6) is arranged, wherein the lighting means (6) is connected to a current supply by way of conductor paths (57), which communicate with a conductor plate (58), and contacts for the current supply are integrated in the conductor plate (58).

2. Cover frame according to claim 1, **characterised in that** the lighting means (6) is an LED.

3. Cover frame according to one or more of the previous claims, **characterised in that** the contacts for the current supply are formed by spring contacts (7).

## Revendications

1. Cadre de recouvrement (5) pour dispositifs d'installation, en matériau translucide, comprenant au moins un orifice (16) délimité par une bordure (54), sachant qu'est prévue au moins une poche (56) dans laquelle est agencé un moyen d'éclairage (6), sachant que le moyen d'éclairage (6) est relié par le biais de circuits imprimés (57) à une alimentation électrique, circuits qui sont eux-mêmes reliés à une carte (58) à circuits imprimés, et que dans la carte (58) à circuits imprimés sont intégrés des contacts d'alimentation électrique.

2. Cadre de recouvrement selon la revendication 1, **caractérisé en ce que** le moyen d'éclairage (6) est une LED.

3. Cadre de recouvrement selon l'une ou plusieurs des revendications précédentes, **caractérisé en ce que** les contacts assurant l'alimentation électrique sont formés par des contacts à ressort (7).
